Europäisches Patentamt

European Patent Office

Office européen des brevets

(11) Publication number: **0 203 899**
**A1**

(12) # EUROPEAN PATENT APPLICATION

(21) Application number: **86850161.0**

(22) Date of filing: **05.05.86**

(51) Int. Cl.⁴: **C 04 B 28/26**

(30) Priority: **07.05.85 SE 8502242**
**08.08.85 SE 8503843**

(43) Date of publication of application: **03.12.86**
**Bulletin 86/49**

(84) Designated Contracting States: **AT BE CH DE FR GB IT LI LU NL SE**

(71) Applicant: **Lundström, Claes, Ekhagsvägen 7, Stockholm (SE)**

(72) Inventor: **Lundström, Staffan, Ekhagsvägen 7, Stockholm (SE)**

(74) Representative: **Avellan-Hultman, Bengt A., HULTMANS PATENTBYRA AKTIEBOLAG Jungfrugatan 16, Stockholm 5 (SE)**

(54) A method for the production of a moulding mass, containing water glass.

(57) A moulding mass containing water glass is produced in traditional way, however in such a way that one adds, before solidification of the water glass, between 3 and 5 percent of silica, calculated on the total dry weight. To the moulding mass thus obtained, one may add different filler materials or modifying materials for influencing the final properties of the moulding mass.

Applicant: CLAES LUNDSTRÖM

Inventor: Staffan Lundström

A method for the production of a moulding mass, containing water glass

It is known to produce moulding masses containing water glass. With the conception "moulding masses", in this connection, is meant shapeable or plastic masses.  Even if they are, preferably, shaped by  casting, they may in many a case be subjected to assume the shape of the final product in some other way, e.g. by pressing, rolling or the like.  Such moulding masses have a wide field of use, for instance for the production of different kinds of objects but also as a binding means between surfaces of the most different kinds.

In the production of such a moulding mass known per se, an expression which is, thus, here used in its widest sence under refe-- rence to the above mentioned fields of use and working methods, one used to proceed by  removing the water or, in any case, essentially decreasing the content of water in the thick fluid solution of water glass in the form of an alcali silicate.  In this way, a solid product was obtained, often called "water glass quartz" and created either by  drying out the liquid water glass or by additibn of acids for changing its pH-value and, thereby, dissolving the alcalic milieu. Thus, it has happened that a sodium hexa fluoride was added as curing means, this medium being water consuming and also influencing the pH-value in the said direction.

Such a moulding mass may be provided by adding, during its process of curing or immediately before same, another material, for instance in a way known per se quartz meal (calcium silicate, $SiO_2$), whereby a mass, more or less homogenuous is formed, in which the particles of the additional material are bound together by the water glass now free of water or, as to its content of water reduced.

Water glass exists as a silicate of sodium (Na) and also as a silicate of potash (K) and, finally, as a mixed silicate of sodium and potash. A water glass from ammonium is also known but it has little or no practical use. The sodium water glass is the most usual one and in the following description of the present invention, it will be described on basis of sodium water glass. This, however shall not mean that the invention should be limited to this specific kind of water glass.

The product made from such a moulding mass has a very high wearing and abrading resistance. When used as a binding means it attaches extremly well to most materials, thereby also to many such materials, to which traditionally existing binding means do not show any tendency to attach. The product also gets an increased pulling rigidity and blowing rigidity, but it has not been possible to find any unitary connection between these three kinds of rigidity except for the matter of fact that the increase of the pressure rigidity is usually the most apparent, one, the increase of the blow rigidity only being rather small.

Several methods are also known for the production of moulding masses of the above mentioned type having properties, which have been improved and/or modified by the addition of further additional materials for the purpose of modifying their properties.

The present invention regards a method for the production of a moulding mass in the sence mentioned above and of the type mentioned above by means of additions causing further essential improvements of the properties of the moulding mass, especially by the the formation of crystals in the mass being promoted, created in the reaction, and by the mass getting less sensible for the content of water in the water glass than was earlier the case. It has also proved that a moulding mass produced according to the present invention allows for an essentially wider variation of traditional additions whereby a better distribution of the specific properties of the moulding mass is ensured, which are desired to achieve by said additions.

According to the invention, silika is added to the moulding mass known per se, preferably in the form of crystal meal or crystal grains and in quantities which will be apparent from the following.

Silika is the traditional denomination for such silicon i pure form or in some simple compound, which originated by decomposition of some silicon compound of higher value at high supply of power, such that this silicon got in same way as applied to carbon and other elements chemically related to carbon, a chemical activity.

It is not known quite sure how this "activity" should be explained, but a theory which is probably correct is that one or more of the electrons in the active silicon have been displaced out of their normal orbits such that an inner molekular tension was created, at the liberating of which large quantities of power were released. Under the influence of these quantities of power the active silicon may cause reactions of chemical nature which would otherwise not at all or anyway only at a limited scale exist in non-activated silicon. The feed of this power usually takes place by the silicon compound being heated to a very high temperature. As a consequence of this, one will find active silicon which has been activated to a very high rate in fly ashes from the steel work industry, within which these high temperatures exist.

When activated silicon is added to the moulding mass, this will change its properties in such an apparaent way, that there is a good reason to assume that a phase chemical reaction is initiated as will often be the case within the silicate chemistry. It has, however, not been possible to find out how this reaction is developing. But it is well known that reactions will appear within the silicate chemistry, which are difficult to understand and to a great extent are still enigmatic. Therefore, the present invention has been created in a purely empirical way.

An essential advantage of the moulding mass according to the present invention as compared with moulding masses on basis of water glass, earlier known, perhaps with an addition of quartz $(SiO_2)$ is that the scope of the different types of additional material is essentially increased.

In tests with a composition of this type, one also investigated the influence of an addition of finely divided cellulose alone to the water glass and water glass mixtures, and, thereby, a lot of circumstances were found, hitherto only empirically observed, which form basis of an especially favourable embodiment of the present invention. The said continuated investigations, in first place, intended to study to what an extent you could add cellulose in finely divided form as a dilution means in order, in this way to get a
product which would be possible to use in a magnitude of cases but
which would, due to the cheap dilution material, be produced at very
low costs. Surprisingly, it was found that the product got unexpected and in many cases extremly usefull properties, fr which
account will begiven below.

Mixing in neutral or basic cellulose proved to be less advantageous, but, on the contrary, it proved that wekly acid cellulose caused
the properties mentioned above in the final product. Investigations
were also made for stating the type of an acid by means of which the
acid properties of the mass after mixing in finely divided cellulose
were obtained, and thereby it was found, that bark meal gave a very
favourable result. Bark meal contains small quantities of tannic acid.
Further, very good results were obtained at use of so called zero fibers, this means fibers of cellulose of such a small size, that
when dewatering, they pass through the wire and are removed along with
the flue water. These fibers, allways, contain given residues of the
acid or acids, resp., used at the cellulose cooking, in first place
sulfurous acid but also many other acids. In general, these acids appear at very small quantites or, if they appear at greater quantities,
they should be weakly active, such as is the case for instance with
tannic acid and sulfurous acid.

An essential improvement of the invention, thus, consists in
adding to the composition of water glass and silika an acidly reacting
cellulose material in finely divided form and at an amount, which
proved in the investigations made to be between 5 and 75 percent of
weight of the total weight of the composition.

In the said tests, it also proved that you could add to the moulding mass according to the invention different plastic emulsions in
the form of such polymerizations products not yet cured or only partly cured. The curing of them or the fullfilling of the said curing
only initiated, thereby, may take place simultaneously with the
curing of the moulding mass after a curer has been added. In this
way, a lot of different new products may be manufactured which have
mainly the properties of the polymerization products in quantitative
respect, but which have these properties at an quantitative extent,
which is essentially improved.

Amongst other additional materials, which may be mixed into the moulding mass according to the present invention, the following ones may be mentioned.

The moulding mass may be provided with additions of heavy materials, especially heavy metals in the form of powder, grains or granules. Amongst such metals lead and copper should be mentioned as well as alloys containing lead and/or copper, e.g. brass and bronce. The power of the moulding mass to assume and accumulate heat will thereby get very high. The conduction of head fed to the moulding mass and the removal of accumulated heat from the moulding mass, respectively, are simultaneously improved, causing a shortening of the inavoidable time consumed for feeding or removal of a given amount of heat.

Further, the moulding mass may be expanded to a higher degree than was earlier possible, still maintaining its rigidity, and, thereby the expansion may be effected in may different ways. For instance, some suitable tenside may be mixed into the mass in presence of air, or one may add to the moulding mass some plastic, expanding under the influence of heat, such as poly styrene or poly uretane and thereafter heat the moulding mass before it has get cured all through. A suitable temperature at addition of poly styrene, for instance is $90^{\circ}$ C.

It was mentioned above that one could mix in cellulosic material in finely divided form in acid milieu. If one would not estimate the advatages emanating thereby, one may mix in the cellulosic material on basic milieu. Thereby, the cellulosic material preferably is zero fibers which are added along with bi-carbonate to the moulding mass according to the present invention, preferably after it has been allotted a somewhat weaker consistency by the addition of a plastic.

It is not only possible to mix the moulding mass according to the invention with many different plastics but also with other materials such as asphalt and latex, preferably when said materials are in emulsion. Said materials will give to the moulding mass improved property as binding means.

Due to this improvod binding property when the moulding mass is used as a bindning means, it will also be especially well adapted for re-inforcement purposes. Such re-inforcement may be effected with good results by means of re-inforcement materials wich were earlier regarded less suitable.   Often, just these materials for
re-inforcement are very cheap causing that one may provide a product,
comparable with earlier known re-inforced materials at much lower
costs.When working with a moulding mass according to the present inve-
tion it has been found that the curing takes place beginning at the
outer surface of the mass such that a skin is formed, which is plastically shapeable and very tough, the mass inside of this skin initially
being plastically shapeable to a higher degree with a power thereafter
to retain its shape.  Thereafter, one may by pressing, rolling or the
like give to a quantity of said mass a given shape, which it will,
thereafter, retain during the continuation of the curing.  This matter of fact may, for instance, be used when impressing a pattern or a
relieff into the surface of bodies of the mass according to the invention.

Amongst the advantages of the invention, there should also be
mentioned that it will provide much a better fire protection when used
in a way which is earlier known from usual water glass based building
products, for instance as a cover on fire dangerous building parts.

Therefore, it has been possible, in construction details, which
have been covered with a moulding mass according to the present invention,  to mix in larger quantites of otherwise fire dangerous materials such as saw dust, turf and other organic materials or asphalt emu-
sion, without decrease of the fire protecting properties.  The fire
protecting properties also cause that the moulding mass according to
the invention will be suitable as a binding means in the production of
laminar materials, especially plates for building purposes where one
was, earlier, adviced to different types of glue which had either a
bad attachment power or were rather strongly apt to burn.

Intricate investigations in connection with the present invention, thus, have been made in order to state the quantity of silika
(active silicon in pure form or in the form of a simple compound) in
relation to the quantity of water glass, perhaps with an addition of
quartz.  Thereby, it has proved that the specific properties concerned
of the water glass composition according to the invention exist at an
addition of silika such that the part of silika calculated as the
weight of Si, of the dry weight of the sum of silicon, waterglass and
quartz eventually added will be between 3 and 5 percent of weight.

The quantity of silika should not be less than 3 percent of weight because, in such a case, it would not be sufficient for providing the said and above further described advantageuous effects, nor should it be less than 5 percent of weight because, in such a case, would the rigidity be less without the surplus of silika causing any observable improvement of the above mentioned properties of the moulding mass. The best result is obtained if the part of silika is between 3.6 and 4.5 percent of weight or, with other words, about 4 percent of weight.

In the tests mentioned above with intermixing finely divided cellulose, especially zero fibres from the paper and pulp industry, it further proved that such an intermixing in basic milieu was, certainly, advantageous in given respects but in other respects it was less favourable. But it also proved that mixing in cellulosic material in acid milieu in the way mentioned above would give a very favourable result. Such an intermixing did not affect the fire safety and the product, still, appeard as flame safe and fire safe. At a small addition of of the acid cellulose, one could certainly retain a weak flame under strong formation of soot but when the amount of cellulose was increased, one got complete flame safety of the product and if the combustion was retained by an outer source of fire in the way mentioned above, and, thereafter the source of fire was removed, then the fire immediately extinguished.

Another apparent property of the product produced was its elasticity, which did not seem to affect its draw rigidity. Products of high elastic shapeability without any risk for breakage find use for many different purposes where one had, earlier, no cheap material available.

The most important property of the product concerned, however, is its cheap production costs. Mainly, it comprises materials, which were earlier regarded not only as useless but even as harmful and, unfortunately, impossible to use for any usefull purposes. Then, it must be regarded extremly desirable to find a useful application of these materials. It is such an application which has been made possible according to the present invention. To this adds that the final product gets favourable properties without, simultaneously, being more expensive. Rather, it may be produced in a cheaper way.

In the investigations forming basis of the present invention, it further proved that the degree of acidity (pH) of the cellulosic material used is of decisive importance. At to low a value of pH the advantageous properties given account for above will not show up in the product manufactured from the moulding mass, and, at too high a value of pH the curing will take place so quickly, that there will not be sufficient time available for controlling the run of the production, and the shaped body produced will also get brittle and fragile. This means, therefore, if one causes by choice of the value of pH that seemingly the curing would take place slowlier than would be desirable with respect to the demand for a rational production, this will not mean a difficulty, which cannot be tolerated. It is only required to add to the curer an accelerator and as such an accelerator preferably some suitable phosphor compound is used, e.g. ammonium phosphate.

Further, in the production of objects under addition of cellulosic material in acid milieu, the curing may take place by means of electric alternating current flowing through the mass, whereby one will get a very effective means for controlling the speed of curing.

Extensive investigations, therefore, have been made for finding the limit values of the pH of the acid cellulose. These investigations have proved that the pH should be between 2 and 6. If the pH is less than 2 or more than 6, you will not get a perfect product. Usually it would even not be possible to use.

When intermixing the cellulosic material in the form of zero fibres from the sulphate industry, one will immediately get good results. If, on the contrary, the zero fibers are collected from the sulphite industry, a given difficulty may arise. As a matter of fact, the zero fiber material from the sulphite industry is usually so strongly acid when leaving the wire that it will, at this time certainly be within the limits for the pH mentioned above, but the said material will usually not be in this state. The reason of this difficulty is that the zero fiber material was, hitherto, regarded a harmful product, and, therefore it was washed away through existing outlets to adjacent water courses along with the waste water (lye water) from the wire , but this caused an acidification of the water course and in some cases of the ground water. Therefore, it was regarded dangerous to the milieu and prescriptions were given which made it necessary to deacidify the zero fiber material, e.g. by addition of lime (CaO) in specific inter-storing bassins.  By this step, however, the zero fiber material available in trade to be used for the purpose of the present invention, from the cellulose industry and in first paace from the sulphite cellulose industry was brought, as to its pH, outside of the limit values which it should possess according to the present invention.

This disadvantage, therefore, had do be done away with before one could add zero fiber material to a moulding mass of the present type.  In practice, this is made by acidification of the zero fiber material before it is added to the water glass. Thos may take place by addition of adapted quantities of an acid, and, in practice, thereby only sulfuric acid will be used.

Zero fiber material from the sulphite pulp industry has proved to be the better one, but it was also possible to use zero fiber cellulose from the sulphate pulp industry.  However, it proved that the acidity of the last mentioned fiber is sometimes to high, because it is derived from the strong sulfuric acid $(H_2SO_4)$.  For some purposes, nevertheless it could be used, but not in its existing state if ot was collected directly from the wire, and, in such a case, it had to be de-acidifyed.

The type of the cellulosic material added is not of decisive importance.  The reason why we have, above, especially mentioned zero fiber material from the cellulose industry, and thereby in first place from the sulphite and sulphate pulp industry, simply is that this material is a non-desired by-product and that, therefore, a useful use of it has been of value by the consequent decrease of damages of the milieu.

Another waste product which is not desirable, however is bark, even if the damages of the milieu from bark are of a rather subordinated importance, because the bark will slowly and in a natural way be the subject of a decomposition turning over into wood mould.  But bark is also a material for which it is desirable to find a useful use and, for this reason, investigations have been made in connection with the creation of the present invention uaing finely divided bark meal. Bark meal comprises when collected from pine wood, quantities of tannic acid, which will rather well correspond to the demands according to the present invention.  Usually, therefore, no adjustment of the pH is necessary.

It was mentioned above that the quantity of cellulosic material added may be varied within rather wide limits, and, as such limit values were indicated between 5 and 75 percent of weight, in both cases to be calculated on basis of the dry weight of the total of the mass contained in the composition. This variation of the amount of cellulose causes a strong variation of the properties of the $^m$aterial produced. At low content of cellulose will, contrary to what one would assume, the rigidity of the produced objects be less, but simultaneously a very light product is obtained having exceedingly good properties of elastically returnable power of changing its shape. The rigidity successively increases with increase of the amount of the water glass based initial material, but the power of elastic return of shape simltanesously will be less, however only slowly. Even at the highest content of cellulosic material proposed of 75 percent of weight will this elastic power of return be remarkably strong. Of course, however, the product will be heavier, the greater the quantity of the initial material contained in the product is and the less the quantity of cellulosic material is.

The above mentioned properties of a product from the composition according to the onvention has as its result that this composition may advantageuously be used in the production of many different types of objects. Amongst such objects allready above have been mentioned heat accumulators, whereby it was provided that a heavy metal is introduced in the mass such as lead or copper. Both lead and copper are rather expensive, and if it desired to build up an accumulator of heat at lower costs even if with less effectivity, one may instead of these metals use some other material within the group which used to be called "brown material" and in which such materials as soapstone, felspar, serpentine and olivine are contained.

The composition according to the invention further is especially suitable for the production of building materials in the form of plates for use in such cases when, earlier, gypsum plates or coke slag plates or the like were used. The use of the moulding mass according to the invention, however, shall not be limited to these fields of use.

Independently of if cellulosic material has been added or not, and also, when using cellulosic material, independently of if this took place in basic or in acid milieu, tests have also been made with an addition of different polymerization products.   Thereby, it has
proved that the **adva**ntages mentioned above will exist independently
of what polymerization product is used as a filler for the purpose of
giving the final product the specific properties.In these tests, however, a curiosity could be observed for which one could not find a reliable explanation.   Adding to the water glass composition according
to the invention chosen parts of two different polymerization products, e.g. a phenolic plastic and an acrylic plastic, or an epoxy
plastic and an acrylic plastic, one will get a final product which
will not only possess the qualitative properties of the two initial
polymerization products in combination, but these will appear in a
form, which is quantatively stronger.

As an example, it may be mentioned that one may use the water
glass composition according to the invention for improving the action
of the properties which acrylic plastics have as well as those  which
epoxy plastics have, but if both of them are added, one will get a rigidity of the ready product substantially greater than the rigidity of
the composition according to the invention with an addition of only
one of the two plastics.   It has not been possible to find the explanation of this, but it seems to be possible that the phenomenon may
depend upon some kind of a cross binding between the two plastics
under influence of either water glass or, which seems to be more
probable, the silika, said silika having a latent power, so that it
may act as an activator/catalyst.   Possibly, also quarts if present may
participate this probably catalytically based reaction.   This last
mentioned, however, is doubtful.

The investigations, therefore, have been continued as far as
regards two such polymerization products chosen, and due to the exact
and precise properties of each polymerization product _per se,_ it was
supposed that the most reliable result would be obtained if the inves-
tigatinns were made on basis of an addition of an acrylic plastic
in combination with an epoxy plastic to the water glass composition
according to the invention. Thereby rigidity values were obtained, which
were, certainly, a little undetermined, but which were in general
about 40 percent higher than the values which could be obtained with
the water glass composition according to the invention under addition
of only one of the two said plastics.   The matter of fact that the
rigidity values were a little undetermined was supposed to depend upon
the fact that, when the tests were made  one had not produced the

0203899

- 12 -

particles of the plastics with one and the same shape and size, but this moment of uncertainity was regarded to correspond to circumstances as they are in practice.

The phenomenon was especially well observable within a range of between 10 and 30 percent of weight of acrylic plastic and also between 10 and 30 percent of weight of the epoxy plastic, said percentages in both cases being calculated on the total of the weight of the mass. No appreciable difference could be observed if one for instance added one of the plastics in a quantity of 10 percent of weight and the other one in a quantity of 30 percent of weight or vice versa. But one could observe that the maximum of pressure rigidity was obtained when the plastics were added in quantities which were between 15 and 25 percent of weight of the total of the dry weight of water glass and silika and the quartz perhaps present.

It proved that the blow rigidity, the pressure rigidity and the draw rigidity did all increase in the unexpected way mentioned above, but that the draw rigidity increased less than the two other ones. It was not possible to find any clear answer to the question why the three types of rigidity increased at different rates.

A mean value of the rigidity of the three types mentioned was calculated as about 30 % more than the increase of rigidity obtained when only the one or the other one of the two plastics were added to the composition of water glass and silika and perhaps quartz. This mean value, thus was a little lower than the value of 40 % mentioned above.

Below, some examples of the use of the invention will be given: All of them have been tested and have been found in an extensive rate to satisfy the desire about the advantages given account for.

Example 1:

This example regarded the use of the composition as a binding means, more closely for use in situ at the time when a binding between two building materials is required. The composition was composed as follows:

| | |
|---|---|
| Sodium water glass, dry weight | 295 parts |
| Quartz meal, dry weight | 251 parts |
| Silika (fly ashes), dry weight | 25 parts |
| Curing means (sodium hexa fluoride) | 56 parts |

The composition gave a very good binding effect, also on materials to which water glass alone as well as other known compositions of water glass did not at all attach.   After addition of the curing means the composition hardened within a time of less than ten minuits. At comparative tests with a compositinn without silika but with the same quantity of curing means, the hardening took a time of at least several hours and, in some cases, up to one or more days.

Example 2:

This example also regarded a composition to be used as binding means, this time, however, between the laminæ in a laminated plate for building purposes.   Also now comparative tests were made without addition of silika and it proved that the composition with silika gave a bindung effect which was 30 % stronger than the one obtained without silika.   The composition was composed as follows:

| Sodium water glass, dry weight | 270 parts |
| Silika (fly ashes), dry weight | 11 parts |
| Curing means equal as in Ex 1 | 18 parts |

Amongst others it proved at the tests that the binding means attached well to window glass, to which traditional water glass based binding means do not at all attach, or if the glass is frosted certeinly will attach  but with a non resting binding.   The same applied to shiny metal surfaces.

Example 3:

This test intended creation of a floor cover material to be used in factory localities, where heavy vehicles are driven.   The intention was to provide a sound damping cover having long duration. The composition has the following content:

| Sodium water glass | 270 parts |
| Quartz meal | 300 parts |
| Silika | 24 parts |
| Curing means (same as in Ex. 1) | 18 parts |

Same composition was also prepared leaving out the quartz meal. The two compositions were compared during completely equal circumstances.   Both hardened at a time of between 8 and 12 minutes after the curing means was added.   Waste oil and fats did not attach to the surface of the covered floor, which was regarded the perhaps most important advantage of this floor cover when used in a factory locality.

The two tested floor covers were subjected to artifical strains in a test bank by alternating pushes snd vibrations with an intensity, calculated to correspond to normal strains during five years. The surfaces of the floor cover containing quartz meal remained intact. The surface of the floor cover which didn't contain quartz meal after a period of time corresonding to between 4 and 5 years proved to have smaller fissures, but they were not deep. Simultaneously, the floor cover produced inclusive of quartz meal still was intact.

Example 4:

In this case the composition was used for production av heat accumulating bodies for a steam generator. The composition was as follows:

| | |
|---|---|
| Sodium water glass | 250 parts |
| Copper granulate | 750 parts |
| Reinforcement (Steel wool) | 40 parts |
| Silika (fly ashes) | 50 parts |
| Curing means (same as above) | 54 parts |

The heat accumulator bodies were heated in the steam generator to a temperature of $400^{\circ}$ C and, thereafter, they were cooled by spraying so that their temperature sunk during the time of one second to $85^{\circ}$ C. Earlier, one had for same purpose used heat accumulator bodies from same composition, however without the addition of silika. These heat accumulator bodies with an addition of silika proved to have a life length of avaragely eight times the one for heat accumulator bodies without silika. The heat accumulator bodies without silika, after a short time, decomposed into pieces or smaller parts, which could, in part, be called powder.

Example 5:

In this test building plates were produced under addition of acid cellulose material. First, a composition was produced containing sodium water glass, quartz meal and silika separately, and thereter, by means of sulfuric acid the pH of the zero fiber material from the sulfite pulp industry was adjusted, said material having been brought in a way known per se to a decreased acidity, which was insufficient for the present purpose. The pH thereby was adjusted to be equal to 4. In this case no conventional curer was used, because it proved that the acid cellulose acted as a curer. The composition was as follows:

Composition: Sodium water glass      57 parts of weight
           Quartz meal         6 parts
           Silika            2 parts
                     In total      45 parts
Cellulosic material:            55 parts of weight
                     In total      100 parts

After the production of the composition proper, the cellulosic material was added, and the curing immediately started. This, however continued a little slowlier than in the tests 1 - 4. Before the curing had continued so far that the material had got stiff, and when it was still in a plastic state, so that it could be shaped, it was cast into moulds for creation of the building plates. Thereafter the curing continued until the plate was ready cured. During the end of the curing this took place rather quickly such that the material turned over from plastic consistency into the final solid one in less than ten minuites. At this time, the produced building plate could be removed from the mould immediately.

The building plates produced had a higher rigidity than any building plates on basis of water glass earlier known. In first place, however, they proved to have a power of elastic return of any change of shape, which was very remarcable. This way, such damages could be avoided which would otherwise easily happen during transportation or mounting, and, as a consequence thereof, the mounting work could take place both easier and quicker.

## C l a i m s

1. A method for the production of a moulding mass containing water glass, preferably sodium water glass, and perhaps also quartz ($SiO_2$) in finely divided form, c h a r a c t e r i z e d thereby, that before the curing of the water glass silika, which means active silicon (Si) is added to said water glass, at an amount of between 3 and 5 percent of weight to be calculated on the total of the dry weight of the materials contained in the moulding mass, curing means also being added.

2. A method according to claim 1, c h a r a c t e r i z e d therby, that finely divided cellulose in basic milieu is added to the moulding mass, said basic milieu preferably being created by means of bi-carbonate.

3. A method according to claim 1, c h a r a c t e r i z e d thereby that finely divided cellose in acid milieu is added to the the moulding mass at a quantity of between 5 and 75 percent of weight calculated on the dry weight of the total of the moulding mass, the cellulose, which consists preferably of so called zero fibers from the pulp industry, having a pH of between 2 and 6.

4. A method according to claim 3, c h a r a c t e r i z e d thereby that the cellulose material is bark meal, preferably from pine wood, and contains tannic acid.

5. A method according to any of the claims 3 or 4, c h a - r a c t e r i z e d thereby that in separate order a composition is prepared of water glass and silika and perhaps also quartz meal, and also the cellulose material is prepared to have a pH as desired, and that, thereafter the two preparations are mixed together.

6. A method according to any of the above claims, c h a r a c - t e r i z e d thereby that plasic emulsions in divided form and not yet cured or incompletely cured are added to the moulding mass, the curing of the plastic taking place simultaneously with the curing of the moulding mass.

7. A method according to claim 6, in which at least two diffe-
rent plastics are added in emulsion, preferably an acrylic plastic and
an epoxyplastic or a phenolic plastic, each at a quantity of between 10
and 30 percent of weight to be calculated on basis of the total dry
weight of the mass.

8. A method according to any of the above claims, c h a r a c -
t e r i z e d  thereby that heavy materials are added to the moulding
mass, preferably heavy metals such as lead or copper or alloys containing lead and/or copper, said metals being in granulated form, for use
of the objects manufactured from the moulding mass as heat accumulators.

9. A method according to any of the above claims, c h a r a c -
t e r i z e d  thereby that the moulding mass is made poruous in
chemical way by adding to same before it gets solid a tenside in the
presence of air.

10. A method according to claim 9, c h a r a c t e r i z e d
thereby that a plastic is added to the moulding mass, said plastic
being of the type which expands under the influence of heat, preferably poly styrene, and that the moulding mass is heated under porosation
of the plastic.

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 075 848 (B. DAVIES et al.)<br>* Claim 1; column 2, lines 29-53 * | 1 | C 04 B 28/26 |
| Y | | 3-7,9 | |
| Y | GB-A-1 415 082 (NITRO NOBEL AB)<br>* Claims 1,4,10,11,14,17; page 1, lines 23-36; page 4, lines 73-87 * | 3-7 | |
| Y | DE-C- 903 672 (R. POHLENZ)<br>* Claims 1,2,4 * | 7 | |
| Y | US-A-3 923 535 (L.B. ZILBERMAN et al.)<br>* Claim 1 * | 9 | TECHNICAL FIELDS SEARCHED (Int. Cl.4) |
| A | WO-A-8 500 035 (MONIER LTD.)<br>* Claims 1,7,8,13,14 * | 1 | C 04 B 28/00<br>C 04 B 14/00<br>C 04 B 16/00<br>C 04 B 18/00<br>C 04 B 22/00<br>C 04 B 24/00 |
| A | EP-A-0 004 846 (CROSBY & CO. LTD.)<br>* Claims 1-5,10; page 1, lines 14,15; page 2, lines 13-20,28,29; page 4, lines 31-33 * | 1,3-5, 10 | C 04 B 38/00 |

The present search report has been drawn up for all claims

| Place of search | Date of completion of the search | Examiner |
|---|---|---|
| THE HAGUE | 08-08-1986 | HAUCK, H.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82